# EUROPÄISCHE PATENTSCHRIFT

(11) **EP 3 697 959 B1**
(45) Veröffentlichungstag und Bekanntmachung des Hinweises auf die Patenterteilung: **16.07.2025**
(21) Anmeldenummer: 18785406.2
(22) Anmeldetag: 17.10.2018
(51) Int. Cl.: D06M 15/564, D06N 3/00, D06N 3/14, D06M 23/08

(54) **ZUSAMMENSETZUNG BESTEHEND AUS PFLANZENMATERIAL MIT ZELLULOSE INSBESONDERE AUS ABFALLPRODUKTEN VON ÄPFELN ZUR ERZEUGUNG EINES LAMINATS UND EIN VERFAHREN ZUR HERSTELLUNG EINES LAMINAT AUS PFLANZENMATERIAL MIT ZELLULOSE, INSBESONDERE AUS ABFALLPRODUKTEN VON ÄPFELN UND LAMINAT HERGESTELLT DURCH DAS GENANNTE VERFAHREN WIRD**
COMPOSITION CONSISTING OF PLANT MATERIAL HAVING CELLULOSE, IN PARTICULAR FROM WASTE PRODUCTS OF APPLES, FOR PRODUCING A LAMINATE, METHOD FOR PRODUCING A LAMINATE FROM PLANT MATERIAL HAVING CELLULOSE, IN PARTICULAR FROM WASTE PRODUCTS OF APPLES, AND LAMINATE PRODUCED BY SAID METHOD
COMPOSITION CONSTITUÉE D'UNE MATIÈRE VÉGÉTALE CONTENANT DE LA CELLULOSE, EN PARTICULIER DE DÉCHETS DE POMMES POUR LA PRODUCTION D'UN STRATIFIÉ ET PROCÉDÉ DE FABRICATION D'UN STRATIFIÉ À PARTIR D'UNE MATIÈRE VÉGÉTALE CONTENANT DE LA CELLULOSE, EN PARTICULIER À PARTIR DE DÉCHETS DE POMMES ET STRATIFIÉ OBTENU PAR LEDIT PROCÉDÉ

(30) Priorität: 18.10.2017 IT 201700117459
(43) Veröffentlichungstag der Anmeldung: 26.08.2020
(73) Patentinhaber: Frumat Srl, 39100 Bolzano (IT)
(72) Erfinder: PARTH, Hannes, 39100 Bolzano (IT)
(74) Vertreter: Ausserer, Anton
(86) Internationale Anmeldenummer: PCT/EP2018/078450
(87) Internationale Veröffentlichungsnummer: WO 2019/076999

(56) Entgegenhaltungen:
- WO-A2-2008/012662
- JP-A- H04 304 242
- US-A- 3 607 481
- US-A- 4 171 391
- US-A- 5 518 764
- US-A- 5 518 764
- US-A1- 2016 272 751
- ANONYMOUS: "Data sheet Arbocel Grade BE 600-30", 1 January 2018 (2018-01-01), XP055522621, Retrieved from the Internet <URL:http://www.vento.com.vn/docs/vi/Cellulose%20fiber/BE600-30.pdf> [retrieved on 20181109]

## Beschreibung

Zusammensetzung bestehend aus Pflanzenmaterial mit Zellulose insbesondere aus Abfallprodukten von Äpfeln zur Erzeugung eines Laminats und ein Verfahren zur Herstellung eines Laminat aus Pflanzenmaterial mit Zellulose, insbesondere aus Abfallprodukten von Äpfeln und Laminat hergestellt durch das genannte Verfahren wird.

Die vorliegende Erfindung betrifft eine Zusammensetzung bestehend aus Pflanzenmaterial mit Zellulose insbesondere aus Abfallprodukten von Äpfeln zur Erzeugung eines Laminats nach dem kennzeichnenden Teil des Patentanspruchs 1 und ein Verfahren zur Herstellung eines Laminats aus Pflanzenmaterial, insbesondere aus Abfallprodukten von Äpfeln nach dem kennzeichnenden Teil des Patentanspruchs 4 und Laminat hergestellt durch das genannte Verfahren nach dem kennzeichnenden Teil der Patentansprüche.

Die Veröffentlichungsschrift WO 2008/012662 beschreibt eine Zusammensetzung, hergestellt aus Resten der Fruchtindustrie insbesondere aus der Verarbeitung von Äpfeln. Die Zusammensetzung, welche in der WO 2008/012662 beschrieben wird, besteht aus Apfelpulver gemischt mit einem Klebstoff, insbesondere einem natürlichen Klebstoff. Die Zusammensetzung welche durch das beschriebene Verfahren hergestellt wird, kann in eine Laminat-Form gebracht werden welche dem Leder ähnlich ist. Das Problem der beschriebenen Zusammensetzung ist ihre schwierige Bearbeitung und ihre geringe Resistenz gegenüber Belastungen und Gebrauch.

Aus der PD 2012 A000 227 ist ein Produkt aus künstlichem Leder bekannt welches biologisch abbaubar ist. Dieses umfasst in Reihenfolge die folgenden Schichten:
- eine Trägerschicht aus natürlichen Fasern,
- eine Mittelschicht welche durch einen koagulierten Schaum gebildet wird,
- eine Oberfläche aus Polymer vorzugsweise aus biologisch abbaubaren Polymer. Insbesondere ist die Trägerschicht aus Fasern, insbesondere natürlichen Fasern hergestellt und/oder aus einem Vliesstoff.

Das mit diesem Verfahren hergestellte Produkt weist eine Oberfläche auf, welche ästhetisch und taktil dem Leder sehr ähnlich ist. Außerdem werden primäre Ressourcen verwendet.

Aus der JP H04 30442A ist eine Zusammensetzung zur Erzeugung von künstlichen Leder bekannt. Das in der JP H04 30442A verwendete Harz ist ein künstliches Harz, und nur durch die Verwendung des künstlichen Harzes können die gewünschten Eigenschaften erreicht werden. Außerdem wird ein pflanzliches Protein verwendet. Zur Herstellung von pflanzlichen Proteinen muss das Pflanzenmaterial eine Reihe von Prozessen über sich ergehen lassen. Außerdem ist die Verwendung von pflanzlichen Proteinen an bestimmte Merkmale des zu verwenden Materials gebunden.

Die US 3 607 481 beschreibt ein Verfahren zur Herstellung von künstlichen Leder wobei Trägerstoff imprägniert wird und dann in einem zweiten Verfahrensschritt mit einer Harzschicht verbunden wird.

Die US 5 518 764 beschreibt ein Verfahren um einen Textilstoff zu koagulieren.

Die Aufgabe der vorliegenden Erfindung ist eine Zusammensetzung zur Realisierung eines Laminats zu bilden, welches aus pflanzlichen Material Fruchtpulver mit Zellulose gebildet ist, insbesondere ein Verfahren um ein Laminat herzustellen welches Reste der Agrar-Lebensmittel Industrie umfasst und im industriellen Umfang verwendet werden kann und ein Laminat, welches durch das genannte Verfahren hergestellt wird und ein Laminat ist, das Widerstanzfähig und industriell herstellbar ist.

Diese Aufgabe kann durch eine erfindungsgemäßen Zusammensetzung erfüllt werden mit einem Verfahren, umfassend eine erste Verfahrensweise, indem die Zusammensetzung aufgetragen wird und/oder eine zweitens Verfahrensweise mittels eines Koagulationsverfahrens.

Die erste erfindungsgemäße Verfahrensweise umfasst die folgenden Schritte:
- ein erster Schritt der Vorbereitung einer Textiltragestruktur,
- ein zweiter Schritt in der eine Zusammensetzung mit zumindest einem Polymer und einem Frucht Pulver aus Pflanzenresten mit Zellulose mit einer Korngröße, welche geringer als 1 mm ist, aufgetragen wird.

Für das erfindungsgemäße Verfahren kann ein Zusatz verwendet werden, welcher zumindest aus einem Polymer besteht vorzugsweise, einem natürlichen Polymer, und aus Frucht Pulver aus Pflanzenresten mit Zellulose mit einem Feuchtigkeitsgehalt von 1-20 % und einer Korngröße, welche von 1µ bis 450µ ist.

Das erfindungsgemäße Verfahren wird verwendet, um ein Laminat herzustellen.

Dieses Laminat ist dem Leder sowohl in seinen optischen Merkmalen als auch ähnlich der Beständigkeit von Leder ähnlich.

Das erfindungsgemäße Verfahren schlägt aus Sicht der Verwendung von Ressourcen eine ökologischere und ökokompatiblere Lösung vor als aus dem Stand der Technik bekannt.

In einem zweiten Verfahren wird dies durch ein Koagulationsverfahren erreicht. Dieses Industrieverfahren besteht darin, ein Trägermaterial zu imprägnieren, zum Beispiel ein Vliesstoff mit einem gelösten Polymer. Dieses gelöste Polymer ist auf Polyurethan-Basis, vorzugsweise aus einer erneuerbaren/biologischen Quelle, zum Beispiel ein thermoplastisches Polyurethan.

Mit dieser Lösung erhält man eine Schäumung in bevorzugter Weise mit regulierbarer Zellbildung. Dieser koagulierter Schaum ist durch eine Zusammensetzung gebildet, welche ein thermoplastisches Polyurethan umfasst mit einer Basis von Ester/ Äther / Karbonat und ihren plastifizierten Mischungen, Pulver aus Zellulose, Zusätze für die Koagulation, zelluläres Acetobutyrat, Pigmente und Wasser.

Das so zusammengesetzte Material ist tierischem Leder ähnlich im Aussehen, Resistenz und anderen Merkmalen, wie zum Beispiel im taktilen Bereich. Die Schäumung erhält man Dank einer chemischen Reaktion, welche in einem Koagulationsbad mit Wasser Exotherm ist.

Um das erfindungsgemäße Verfahren auszuführen wird ein hoher Qualitätsstandard und der Einsatz von besonders ausgewählten Materialien verlangt. Weitere Merkmale und Details einer bevorzugten nicht begrenzenden Ausführungsform des Verfahrens der Erfindung werden hier folgend in der Beschreibung klar und deutlich und mit Bezug auf die beiliegenden Figuren dargelegt. Es zeigen:
- Figur 1 einen Verteiler zum Auftragen des Materials,
- Figur 2 eine erfindungsgemäße Anlage zur Bearbeitung des Materials,
- die Figur 3 eine zweite Anlage, um ein erfindungsgemäße Verfahren zu verwenden,
   Figur 4a,4b,4c ein erfindungsgemäßes Laminat Hergestellt mit einem ersten Verfahren, und
- Figur 4d,4e,4f ein erfindungsgemäßes Laminat hergestellt mit einem zweiten Verfahren, das ein Bad umfasst.

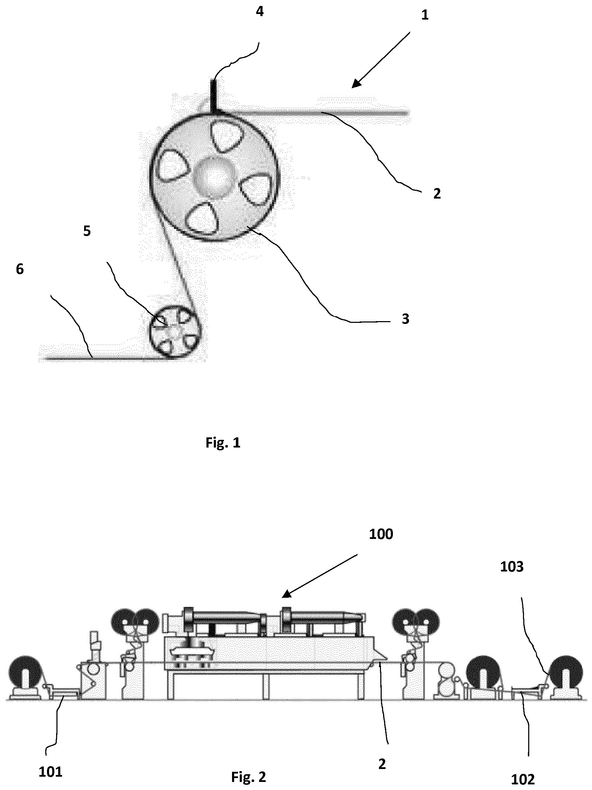

In der Figur 1 wird mit der Bezugsziffer 1 ein Gerät zum Auftragen von Material auf einer Trageschicht bezeichnet. Erfindungsgemäß aus einer Schicht aus einem Textilmaterial 2 welches in einer bevorzugten Ausführungsform ein Stoff aus natürlichen Fasern sein kann, zum Beispiel ein Vliesstoff auf diesen, wird eine Polyurethan Lösung aufgebracht. Diese Polyurethan Lösung wird auf dem Stoffträger 2 aufgebracht. Diese Polyurethan Lösung umfasst ein Pulver aus trockenen bzw. getrockneten Früchten mit Zellulose.

Dieses Fruchtpulver mit Zellulose weist eine Feuchtigkeit zwischen 1-20 % auf, in bevorzugter Weise zwischen 2 % und 15 % und eine Korngröße zwischen 1µ-450µ. Besonders vorteilhaft ist der Einsatz von Apfelpulver. Insbesondere wird Apfelpulver verwendet welches aus den Resten der Industrieverarbeitung gewonnen wird, zum Beispiel aus den Resten der Apfelsaftindustrie oder ähnlichem.

In einem 2. Schritt werden Pigmente oder andere Zusätze hinzugefügt um die Farben auf Wasserbasis zu bilden.

In einem 3. Schritt werden zusätzliche koagulierende Zusätze aufgetragen. Um das aufgetragene Material besser auf dem Stoffträger zu befestigen wird eine zusätzliche Schicht von zusammengesetzten Polymer aus Polyurethan Polymeren in wässriger Form oder gelösten Pigmenten und Farben auf Wasserbasis oder koagulierenden Lösungsmitteln und koagulierenden Zusätzen.

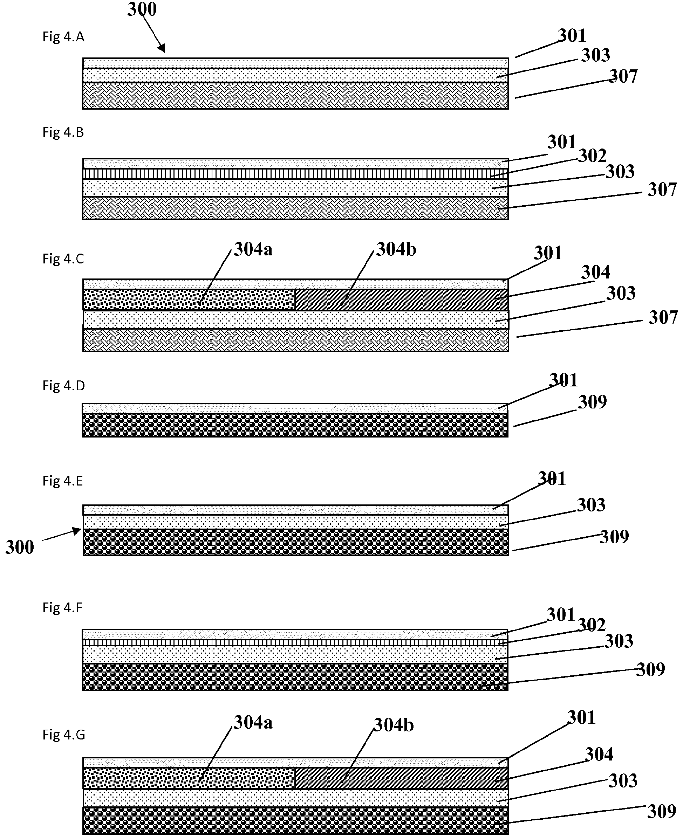

Ein Laminat 300 welches durch ein solches Verfahren hergestellt wird, ist in den Figuren 4A, 4b und 4c dargestellt. Dieses Laminat 300 umfasst in Figur 4A eine erste Schicht 301 aus Polyurethan, bevorzugt biologischem Polyurethan, Mittel zur Erleichterung der Nivellierung, Mittel zur Verhärtung, Pigmente, Bindemittel usw. und pflanzlichem Material mit Zellulose. Die zweite Schicht 303 ist aus Polyurethan und dem pflanzlichen Fruchtpulver Material mit Zellulose hergestellt. Dies alles ist auf der Trägerschicht 307 aufgebracht, welche aus Vliesstoff, Stoff, Stoff aus natürlichen Fasern, Jersey Stoff, Stoff aus Polyester und ähnlichem besteht.

In der Figur 4B ist zwischen der Schicht 301 und 303 die Schicht 302 eingebracht. Diese ist ähnlich wie die Schicht 303 aufgebaut es können leicht geringere Mengen an pflanzlichen Material mit Zellulose verwendet werden.

In der Figur 4C befindet sich zwischen der Schicht 301 und 303 die Schicht 304. Diese kann aus geschäumten oder kompakten Materialen aufgebaut sein, welches eine erfindungsgemäße Zusammensetzung mit einem höherem Anteil pflanzlichen Fruchtpulver Material mit Zellulose als die Schicht 303 ist.

In einem 2. Verfahren wird ein Stoffträger zum Beispiel ein Vliesstoff aus 100 % Viskose in einem Lösungsmittel eingetaucht, welche eine erfindungsgemäße Zusammensetzung umfasst, in bevorzugter Weise ein Polymer aus einer erneuerbaren Quelle auf Basis eines thermoplastischen Polyurethans, getrocknetes Fruchtpulvers mit Zellulose, in bevorzugter Weise Pulver aus Resten der Apfelindustrie, weiteren pflanzliche Stoffen verschiedene Farben und Zusätze zum koagulieren.

Aus einer erneuerbaren / biologischen Quelle versteht man Polymere, welche aus Pflanzen, Früchten, Samen, Algen oder anderen nachwachsenden Rohstoffen erzeugt werden.

Die erfindungsgemäße Trägerschicht und die erfindungsgemäße Zusammensetzung koagulieren nachdem sie in eine Wanne mit Lösungsmittel eingetaucht werden und bilden die Oberflächenstruktur. Dieses Verfahren weist folgenden Vorteile: auf, dadurch dass die erfindungsgemäße Zusammensetzung verwendet wird bildet die Trägerschicht zum Beispiel der Trägerstoff mit der Zusammensetzung eine einzige Schicht dadurch sind die Materialien verbunden, während im ersten erfindungsgemäßen Verfahren die Zusammensetzung auf die Trägerschicht aufgebracht wird. Der Vorteil des ersten Verfahrens ist das die Oberfläche besser verarbeitet werden kann und/oder strukturiert zum Beispiel durch eine Abziehbild /Schicht werden kann und es werden keine Lösungsmittel eingesetzt während durch das zweite Verfahren die Bestandhaftigkeit erhöht wird und man nicht die Gefahr läuft, dass sich die beiden Schichten voneinander trennen d.h. dass sich die Zusammensetzung von der Trägerschicht löst. Durch die beiden Verfahren erhält man ein Produkt welches dem Ausschauen von natürlichem Leder sehr ähnelt.

Auch alle anderen Merkmale wie zum Beispiel physische oder mechanische Eigenschaften erlauben den Gebrauch im oben genannten Gebiet d.h. es kann als Ersatzmaterial für Leder oder lederähnlichen Produkten verwendet werden.

Das Verfahren kann das Anbringen eines Abziehbilds/ einer Schicht auf einem Papierträger vorsehen, auf deren Oberfläche ein negatives Reliefbild angebracht ist. Dieses Reliefbild wird auf die erfindungsgemäße Zusammensetzung aufgebracht und erzeugt somit eine natürliche Struktur.

Durch das Aufbringen der Polymeren auf Basis von thermoplastisches Material, wie zum Beispiel biologisches thermoplastisches Polyurethan auf Wasserbasis wird die Oberfläche veredelt/geprägt.

Durch ein System von Wischer/ Streichelemente wie in Figur 1 dargestellt und einer Anlage 100 mit Trocknungsofen wie in Figur 2 dargestellt, erhält man einen Film mit verschiedenen Schichten welcher immer mittels eines Klebstoffes auf Polyurethan Basis mit dem Träger 2 verbunden wird. Am Ende des Verfahrens wird das Produkt von dem Abziehbild / Schicht getrennt. Das Material wird durch den Ofen 101 geschickt, wo es trocknet.

Nach der Trennung des Abziehbilds/ der Schicht 102 bleibt die Oberflächenstruktur im Material eingeprägt dies lässt die Oberfläche natürlicher und somit lederähnlicher aussehen. Das so hergestellte Material wird dann aufgerollt 103.

Nach dem erfindungsgemäßen Verfahren wird ein Laminat hergestellt. Dieses Laminat ist ein künstliches Leder, welches die folgenden Schichten umfasst:
eine erste Schicht als Trägerschicht in einem Stoff aus natürlichen Fasern,
eine zweite Schicht welche, aus einer erfindungsgemäßen Zusammensetzung gebildet wird, diese Zusammensetzung umfasst zumindest ein Polymer und ein Pulver aus Pflanzenresten mit Zellulose mit Korngröße welche 1 mm nicht überschreitet und wobei die Pflanzenreste weniger als 20 % Gewicht Feuchtigkeit enthalten.

In der Zusammensetzung ist das Verhältnis zwischen Pflanzenreste und Polymer, wobei bis zu 65 % Gewicht Pflanzenreste sind und mindestens 35 % Gewicht Polymer ist.

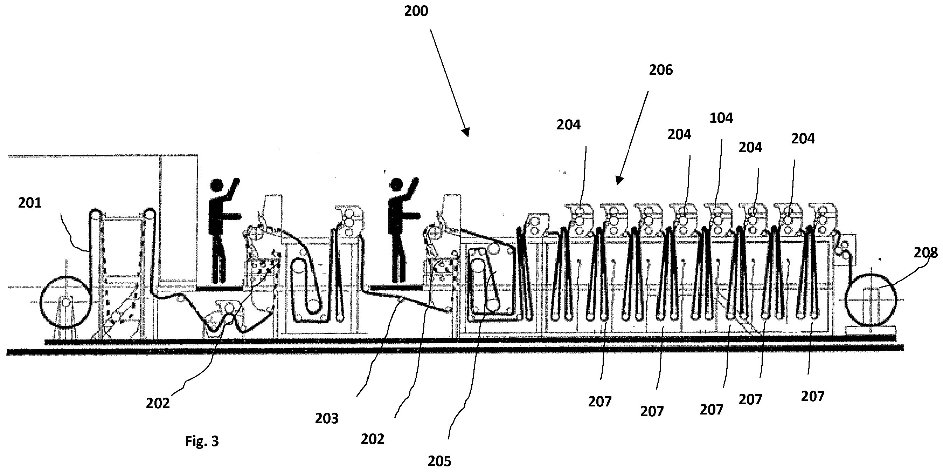

In der Figur 3 ist ein Koagulierverfahren auf einer Anlage 200 dargestellt in der ein erfindungsgemäßes Verfahren verwendet wird. Insbesondere wird in einem ersten Schritt eine Trägerschicht zum Beispiel Vliesstoff 201 abgewickelt. Dann wird eine erfindungsgemäße Schicht aufgebracht 202. Danach wird das Material in einem Bereich 203 vorkoaguliert und dann kann wieder eine erfindungsgemäße Zusammensetzung 202 aufgebracht werden. Dann läuft das Material mit der erfindungsgemäßen Zusammensetzung durch das Bad 205 welches die Koagulierung aktiviert. In einem folgenden Schritt 206 wird mehrmals Druck auf das Material ausgeübt, zum Beispiel durch Rollen, Pressrollen 204 und das Material läuft dann durchmehrere Bäder 207 um gewaschen zu werden. Dies hilft die Mittel, welche für die Koagulierung notwendig waren, auszuwaschen und/ oder nicht verfestigte Teile auszuwaschen. Nach diesem Verfahren wird das so erzeugte Laminat aufgerollt.

Ein Laminat 310, welches durch ein solches Verfahren hergestellt wird, ist in den Figuren 4D, 4E, 4F und 4G dargestellt. Dieses Laminat 310 umfasst in Figur 4D eine erste Schicht 301 aus Polyurethan, bevorzugt biologischem Polyurethan Mittel zur Erleichterung der Nivellierung, Mittel zur Verhärtung, Pigmente, Bindemittel usw. und aus pflanzlichem Material mit Zellulose.

Dies alles ist auf der Trägerschicht 309 aufgebracht welche aus Vliesstoff, Stoff, natürlichen Stoff, Stoff, Stoff aus natürlichen Fasern, Jersey Stoff, Stoff aus Polyester und ähnlichem bestehen und welche durch das Koagulierungsverfahren mit der erfindungsgemäßen Schicht sich verbindet.

Das in Figur 4E genannte Laminat 310 umfasst eine erste Schicht 301 aus Polyurethan bevorzugt biologischen Polyurethan, Mittel zur Erleichterung der Nivellierung, Mittel zur Verhärtung, Pigmente, Bindemittel usw. und aus dem pflanzlichen Fruchtpulver Material mit Zellulose.

Die zweite Schicht 303 ist aus Polyurethan und dem pflanzlichen Material mit Zellulose hergestellt. Dies alles ist auf der Trägerschicht 309 aufgebracht welche aus Vliesstoff, Stoff, Stoff aus natürlichen Fasern, Jersey Stoff, Stoff aus Polyester und ähnlichem und besteht welche sich durch das Koagulierungsverfahren mit der Erfindungsgemäßen Schicht verbindet.

In der Figur 4F ist zwischen der Schicht 301 und 303 die Schicht 302 eingebracht. Diese ist ähnlich wie die Schicht 303 aufgebaut: es können leicht geringere Mengen an pflanzlichem Fruchtpulver Material mit Zellulose verwendet werden.

In der Figur 4G befindet sich zwischen der Schicht 301 und 303 die Schicht 304. Diese kann aus geschäumtem oder kompaktem Materiale aufgebaut sein, welches eine Erfindungsgemäße Zusammensetzung mit einem höherem Anteil pflanzlichen Material mit Zellulose als die Schicht 303 besitzt.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Die vorstehend erläuterten Vorrichtungs- und Verfahrensdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen. Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Zusammensetzung zur Bildung von künstlichem Leder umfassend zumindest ein Polymer und Pflanzen-Pulver aus Pflanzenresten mit Zellulose mit einer Korngröße von 1µ bis 450µ und Feuchtigkeitsgehalt zwischen 1-20 % Gewicht und dass das Polymer Polyurethan ist und die Pflanzenreste Fruchtpulver mit Zellulose mit Korngröße von 1µ bis 450µ sind und eine Feuchtigkeit zwischen 1-20 %.

2. Zusammensetzung nach Anspruch 1, **dadurch gekennzeichnet, dass** die Pflanzenreste mit Zellulose Äpfel mit Korngröße von 1µ bis 450µ sind.

3. Zusammensetzung nach Anspruch 2, **dadurch gekennzeichnet, dass** das Polyurethan aus biologischem Material hergestellt wird.

4. Zusammensetzung nach einem der vorhergehenden Ansprüche von 1-2, **dadurch gekennzeichnet, dass** das Verhältnis von pflanzlichen Resten und Polymer, wobei bis zu 65 % Gewicht aus pflanzlichen Materialien besteht und mindestens 35 % Gewicht aus Polymer besteht.

5. Verfahren zur Herstellung eines Laminats aus biologisch abbaubaren künstlichem Leder, **dadurch gekennzeichnet, dass** es eine Zusammensetzung nach einem der Ansprüche von 1-2 und die folgenden Schritte umfasst:
Erster Schritt: Vorbereitung einer ersten Schicht eines Stoffträgers,
zweiter Schritt: auftragen einer Zusammensetzung nach einem der Ansprüche von 1-2,
dritter Schritt Nivellierung der Zusammensetzung welche auf dem Träger aufgetragen wurde, und trocknen der Zusammensetzung.

6. Verfahren nach Anspruch 4, **dadurch gekennzeichnet, dass** die auf der durch die Zusammensetzung gebildeten Schicht wurde auf der zur Stoffträger Seite gegenüberliegenden Seite ein Abziehbild/Schicht angebracht wird.

7. Verfahren nach Anspruch 4 oder 5, **dadurch gekennzeichnet, dass** das Trägermaterial ein Vliesstoff ist.

8. Verfahren nach Anspruch 5 oder 6, **dadurch gekennzeichnet, dass** das/die Abziehbild/Schicht eine negative Struktur/Reliefs aufweist.

9. Verfahren zur Herstellung eines Laminats aus biologisch abbaubaren künstlichen Leder, **dadurch gekennzeichnet, dass** es eine Zusammensetzung nach einem der Ansprüche von 1-2umfasst und die folgende Schritte: erster Schritt Vorbereitung einer ersten Schicht eines Stoffträgers,
zweiter Schritt: auftragen einer Zusammensetzung nach einem der Ansprüche von 1-2,
dritter Schritt: koagulieren und Trocknen der Zusammensetzung.

10. Verfahren nach Anspruch 8, **dadurch gekennzeichnet, dass** das Trägermaterial ein Vliesstoff ist.

11. Zusammengesetztes Laminat von künstlicher biologisch abbaubaren Leder, umfassend die folgenden Schichten:
eine erste Schicht als Trägerschicht aus Stoff aus Fasern, bevorzugt natürlichen Fasern,
eine zweite Schicht in einer Zusammensetzung aus zumindest einem Polymer das Polyurethan ist und aus Pulver aus Pflanzenresten mit Zellulose mit Korngröße 1µ bis 450µ, wobei die Pflanzenreste einen Feuchtigkeitsgehalt von weniger als 1-20 % Gewicht aufweisen und wobei die Pflanzenreste Fruchtpulver sind mit Korngröße von 1µ bis 450µ sind und eine Feuchtigkeit zwischen 1-20 %.

## Claims

1. Composition for forming artificial leather comprising at least one polymer and plant powder from plant residues containing cellulose with a particle size of 1 µ to 450 µ and a moisture content of between 1-20% by weight, wherein the polymer is polyurethane and the plant residues are fruit powder containing cellulose with a particle size of 1 µ to 450 µ and a moisture content of between 1 and 20%.

2. Composition according to claim 1, **characterised in that** the plant residues with cellulose are apples with a particle size of 1 µ to 450 µ.

3. Composition according to claim 2, **characterised in that** the polyurethane is made from biological material.

4. Composition according to one of the preceding claims 1-2, **characterised in that** the ratio of plant residues to polymer is such that up to 65% by weight consists of plant materials and at least 35% by weight consists of polymer.

5. Method for producing a laminate made of biodegradable artificial leather, **characterised in that** it comprises a composition according to one of claims 1-2 and the following steps:
First step: preparation of a first layer of a fabric carrier,
second step: application of a composition according to one of claims 1-2,
third step: levelling the composition applied to the carrier and drying the composition.

6. Method according to claim 4, **characterised in that** a decal/layer is applied to the side of the layer formed by the composition opposite the fabric carrier side.

7. Method according to claim 4 or 5, **characterised in that** the carrier material is a non-woven fabric.

8. Method according to claim 5 or 6, **characterised in that** the decal/layer has a negative structure/relief.

9. Process for producing a laminate made of biodegradable artificial leather, **characterised in that** it comprises a composition according to one of claims 1-2 and the following steps: first step:
preparation of a first layer of a fabric carrier,
second step: application of a composition according to one of claims 1-2,
third step: coagulating and drying the composition.

10. Method according to claim 8, **characterised in that** the carrier material is a non-woven fabric.

11. Composite laminate of biodegradable artificial leather comprising the following layers:
a first layer as a carrier layer made of fabric from fibres, preferably natural fibres,
a second layer in a composition of at least one polymer which is polyurethane and powder from plant residues with cellulose with a grain size of 1 µ to 450 µ, wherein the plant residues have a moisture content of less than 1-20% by weight and wherein the plant residues are fruit powders with a particle size of 1µ to 450µ and a moisture content of between 1-20%.

## Revendications

1. Composition pour la formation de cuir artificiel comprenant au moins un polymère et une poudre végétale issue de résidus végétaux contenant de la cellulose, ayant une granulométrie comprise entre 1 µ et 450 µ et une teneur en humidité comprise entre 1 et 20 % en poids, le polymère étant du polyuréthane et les résidus végétaux étant une poudre de fruits contenant de la cellulose, ayant une granulométrie comprise entre 1 µ et 450 µ et une humidité comprise entre 1 et 20 %.

2. Composition selon la revendication 1, **caractérisée en ce que** les résidus végétaux contenant de la cellulose sont des pommes ayant une granulométrie comprise entre 1 µ et 450 µ.

3. Composition selon la revendication 2, **caractérisée en ce que** le polyuréthane est fabriqué à partir de matière biologique.

4. Composition selon l'une des revendications précédentes 1 à 2, **caractérisée en ce que** le rapport entre les résidus végétaux et le polymère est tel que jusqu'à 65 % en poids est constitué de matières végétales et au moins 35 % en poids est constitué de polymère.

5. Procédé de fabrication d'un stratifié en cuir artificiel biodégradable, **caractérisé en ce qu'**il comprend une composition selon l'une des revendications 1 à 2 et les étapes suivantes :
Première étape : préparation d'une première couche d'un support textile,
Deuxième étape : application d'une composition selon l'une des revendications 1 à 2,
troisième étape : nivellement de la composition appliquée sur le support et séchage de la composition.

6. Procédé selon la revendication 4, **caractérisé en ce qu'**une décalcomanie/couche est appliquée sur la couche formée par la composition, sur le côté opposé au support textile.

7. Procédé selon la revendication 4 ou 5, **caractérisé en ce que** le matériau support est un non-tissé.

8. Procédé selon la revendication 5 ou 6, **caractérisé en ce que** le décalque/la couche présente une structure/des reliefs négatifs.

9. Procédé de fabrication d'un stratifié en cuir artificiel biodégradable, **caractérisé en ce qu'**il comprend une composition selon l'une des revendications 1 à 2 et les étapes suivantes : première étape :
préparation d'une première couche d'un support de matière,
deuxième étape : application d'une composition selon l'une des revendications 1 à 2,
troisième étape : coagulation et séchage de la composition.

10. Procédé selon la revendication 8, **caractérisé en ce que** le matériau support est un non-tissé.

11. Stratifié composite en cuir artificiel biodégradable, comprenant les couches suivantes :
une première couche servant de couche support, constituée d'un tissu à base de fibres, de préférence de fibres naturelles, une deuxième couche dans une composition comprenant au moins un polymère qui est du polyuréthane et de la poudre de résidus végétaux contenant de la cellulose, avec une granulométrie comprise entre 1 µ et 450 µ, les résidus végétaux ayant une teneur en humidité inférieure à 1-20 % en poids et les résidus végétaux étant des poudres de fruits ayant une granulométrie de 1 µ à 450 µ et une humidité comprise entre 1 et 20 %.
